# EUROPEAN PATENT APPLICATION

(11) **EP 2 764 950 A1**
(43) Date of publication of application: **13.08.2014**
(21) Application number: 13154298.7
(22) Date of filing: 06.02.2013
(51) Int. Cl.: B23P 15/00, B25B 13/06, G09F 7/00

(54) **Method for marking a tool**

(71) Applicant: Pard Hardware Industrial Co., Ltd., Taichung City 407 (TW)
(72) Inventor: Lin, Da-Sen, 407 Taichung City (TW)
(74) Representative: Lang, Christian

(57) **Abstract**

A method is provided for marking a tool. The method subsequently includes the steps of hardening the surface of the tool, making inscription in the surface of the tool, filling colorant in the inscription, clearing the surface of the tool of an excessive portion of the colorant placed outside the inscription, and electroplating the surface of the tool.

## Description

### BACKGROUND OF INVENTION

### 1. FIELD OF INVENTION

The present invention relates to a method for marking a tool and, more particularly, to an efficient and inexpensive method for marking a tool.

### 2. RELATED PRIOR ART

Nuts are often engaged with from disengaged from screws with tools such as socket wrenches, allen keys, open-ended wrenches and box-ended wrenches. Thus, machines or devices are assembled or dismantled.

There are various sizes of tools for driving various sizes of screws or nuts. Tools are marked with sizes to facilitate a user to pick a tool of a right size. Therefore, there have been devised various methods for marking tools such as those disclosed in US Patent Nos. 6761093, 7010998 and 7543366.

In those methods, a mark is inscribed in a tool by rolling or punching. The mark may include a letter, a pattern, a symbol or a numeral. The tool is then subjected to heat treatment so that the tool is hardened. The tool is then printed and/or dyed so that the mark is clear in contrast to the other portion of the tool.

The rolling or punching of the tool to inscribe the mark in the tool must be conducted slowly to avoid damaging the tool. This however renders the marking of the tool lengthy. Furthermore, the mark is deep because the heat treatment is conducted after the rolling or punching. It however requires a lot of paint or dye to fill the mark. This however renders the marking of the tool expensive.

### SUMMARY OF INVENTION

It is the primary objective of the present invention to provide an efficient and inexpensive method for marking a tool.

To achieve the foregoing objective, the method is provided for marking a tool. The method subsequently includes the steps of hardening the tool, making inscription in the tool, filling colorant in the inscription, clearing the tool of an excessive portion of the colorant placed outside the inscription, and electroplating the tool.

Other objectives, advantages and features of the present invention will be apparent from the following description referring to the attached drawings.

### BRIEF DESCRIPTION OF DRAWINGS

The present invention will be described via detailed illustration of two embodiments referring to the drawings wherein:
FIG. 1 is a flow chart of a method for making and marking a tool according to the first embodiment of the present invention;
FIG. 2 is a perspective view of a socket to be processed in the method shown in FIG. 1;
FIG. 3 is a perspective view of an allen key to be processed in the method shown in FIG. 1;
FIG. 4 is a front view of a wrench to be processed in the method shown in FIG. 1;
FIG. 5 is a perspective view of another socket to be processed in the method shown in FIG. 1;
FIG. 6 is a perspective view of the socket of FIG. 2 in the method shown in FIG. 1;
FIG. 7 is a cross-sectional view of the socket of FIG. 2 at a step in the method shown in FIG. 1;
FIG. 8 is a cross-sectional view of the socket of FIG. 2 at another step in the method shown in FIG. 1; and
FIG. 9 is a flow chart of a method for marking a tool according to the second embodiment of the present invention.

### DETAILED DESCRIPTION OF PREFERRED EMBODIMENT

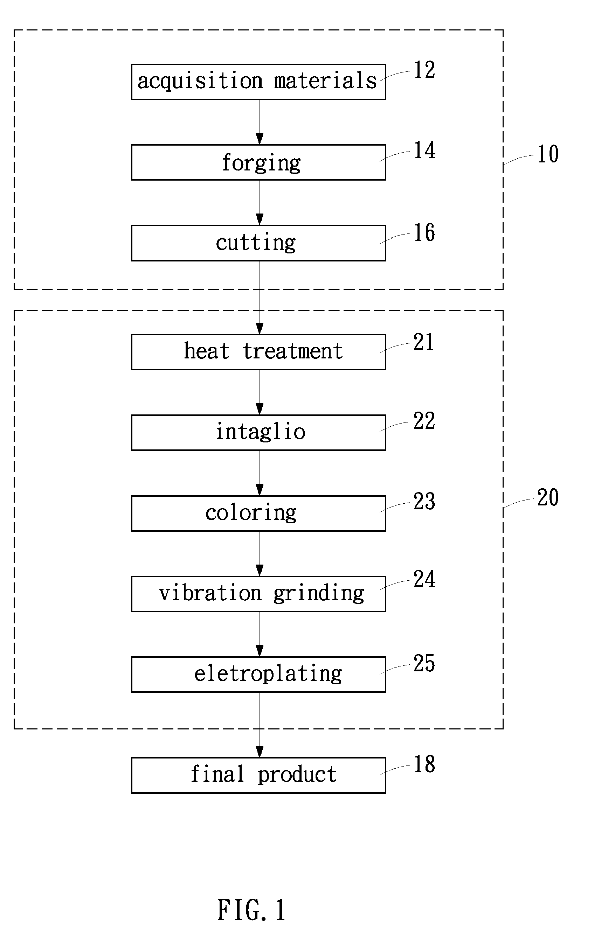

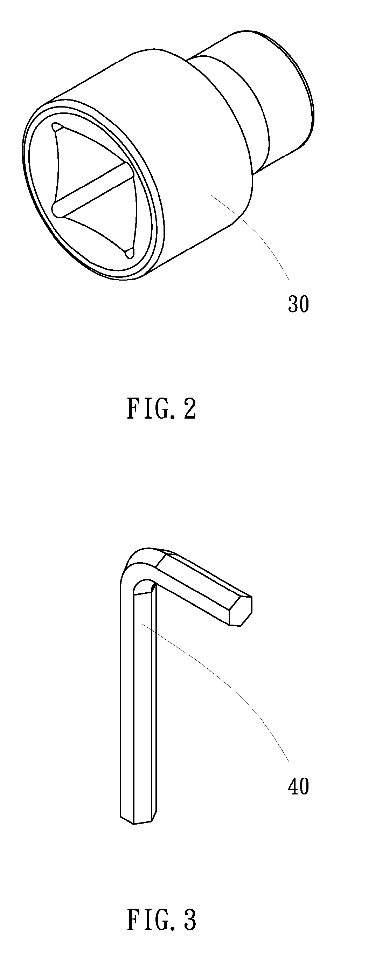

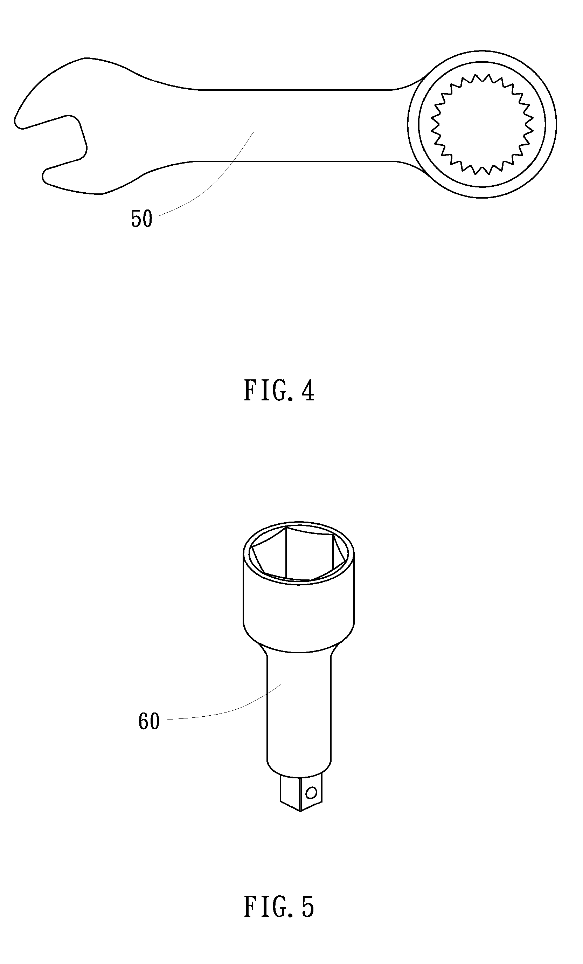

Referring to FIG. 1, there is shown a method for making and making a tool in accordance with a first embodiment of the present invention. The tool may be a socket 30 referring to FIG. 2, an allen key 40 referring to FIG. 3, a wrench 50 with an open end and a boxed end as shown in FIG. 4 or an extension rod 60 as shown in FIG. 5. The description of the method will however be based on the marking of the socket 30.

Referring to FIG. 1, the method includes a subroutine 10 for making a tool and another subroutine 20 for marking the tool. At 12, an order is made to acquire materials needed for a tool based on a production plan. The materials are delivered to a manufacturer from suppliers with proper tools for transportation.

At 14, the materials are forged in a forging machine to subject the materials to plastic deformation. Thus, the tool is made.

At 16, the tool is cut. The cutting may be conducted with a saw, a pair of scissors, a lathe, a drill, a mill, a plough, a grinding machine or a boring machine. The tool is substantially made with required mechanical properties, shape and size.

A superficial layer of the tool of about several to tens of micrometers must be processed to achieve required properties. The processing may be done to improve mechanical properties such as hardness. The processing may be done to improve resistance against oxidization and/or erosion. The processing may be done to increase thermal durability, thermal conductivity and/or thermal reflection. The processing may be done to reduce roughness to reduce friction. The processing may be done to improve electrical conductivity. The processing may be done to change optical reflectivity and optical absorption. The processing may be done to improve the look such as clearness, glistering and color.

Referring to FIG. 1, at 21, the surface of the tool is hardened by heat treatment. In detail, the tool is subjected to heating and cooling under control to increase the hardness, tenacity, stress, ductility and elasticity. In more detail, the tool is heated to a certain point of temperature, kept at the certain point of temperature for a certain period of time, and cooled to the room temperature or a lower point of temperature at a certain rate. Thus, the structure of the materials and therefore the properties of the tool are improved.

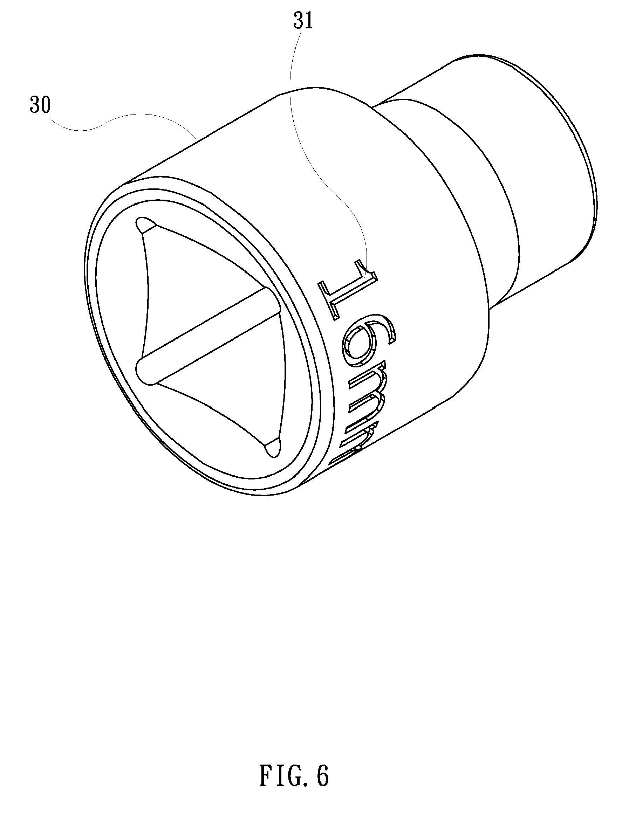

Referring to FIGS. 1 and 6, at 22, the hardened surface of the tool is made with inscription 31 by rolling or punching. The inscription 31 includes letters, patterns, symbols and/or numerals. The inscription 31 is used for identification. The depth of the inscription 31 is smaller than those made in the prior art. To make the inscription 31, used is a roller or a mold formed with a relief. The relief can be pressed into the hardened surface of the tool at high speed without risk of damaging the hardened surface of the tool. Therefore, the making of the inscription 31 is efficient, and so is the entire method.

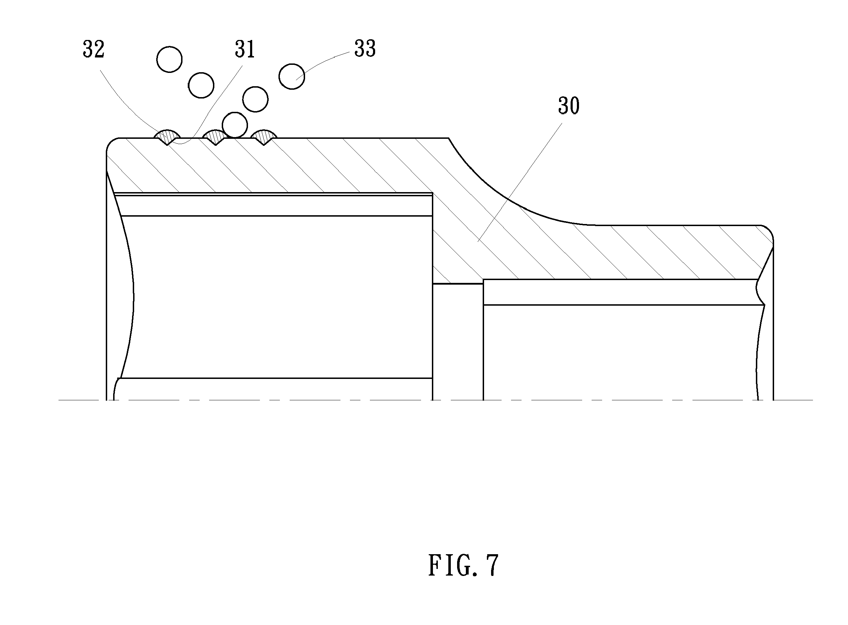

Referring to FIGS. 1 and 7, at 23, the inscription 31 is filled with colorant 32 such as paint and dye. The colorant may be soluble or non-soluble organic or inorganic colorant. The thickness of the layer of colorant 32 is small since the depth of the inscription 31 is small. Hence, only a small amount of colorant 32 is filled in the inscription 31. The step of filling the inscription 31 with the colorant 32 is inexpensive, and so is the entire method.

It is preferred that the colorant 32 is only filled in the inscription 31. It is however inevitable to have an excessive portion of the colorant 32 outside the inscription 31 in practice.

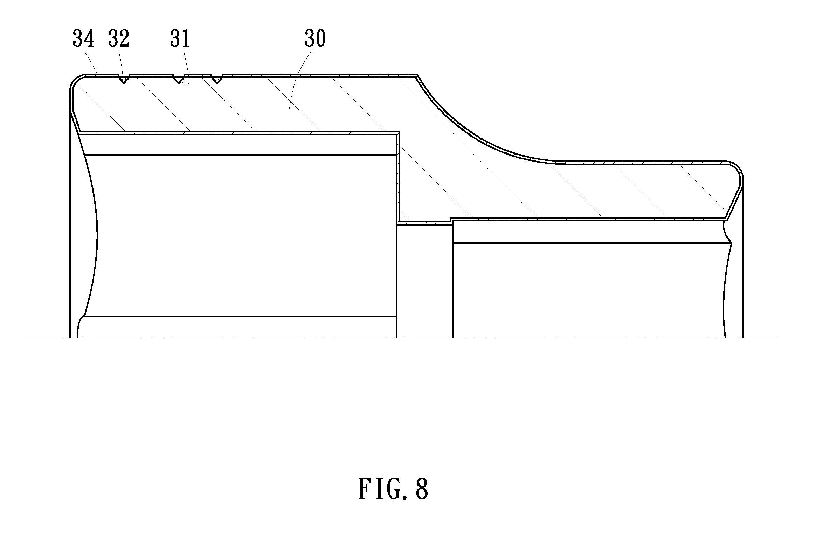

Referring to FIGS. 1 and 8, at 24, the surface of the tool is cleared of the excessive portion of the colorant 32 by grinding such as vibration grinding. In the vibration grinding, the tool is placed amide a large amount of grinding balls 33 contained in a container. The surface of the tool is grinded by the grinding balls 33 that are vibrated as the container is vibrated. The grinding balls 33 are large so that they do not go deeply into the inscription 31. Therefore, substantially none of the colorant 32 is removed from the inscription 31 while the excessive portion of the colorant 32 is removed from the surface of the tool.

The grinding balls 33 further turn the surface of the tool into a matted surface to retain residual stress of compression to increase resistance against fatigue. Moreover, rust, burs and/or oxidation are removed, the friction coefficient is adjusted, the fineness is adjusted, the adhesiveness is increased, the aesthetics is improved, and/or glistering is reduced.

Referring to FIG. 1, at 25, the tool is subjected to electroplating. The tool is submerged in electroplating solution and connected to the cathode of an electroplating device. A piece or block of metal is submerged in the electroplating solution and connected to the anode of the electroplating device. As the electroplating device is turned on, the atoms of the metal lose electrons and hence become positive ions. The positive ions travel onto the surface of the tool through the electroplating solution. The positive ions combine with electrons and therefore become atoms that form a coating 34 on the surface of the tool except the colorant 32. Then, the electroplating device is turned off, and a final product 18 of the tool is removed from the electroplating solution. Anodizing may be used as a particular form of electroplating.

The colorant 32 is in strong contrast to the coating 34. The mark that is made the colorant 32 in the inscription 31 is clear amid the surface of the tool. Hence, the letters, numerals and/or patterns of the mark are highly identifiable. Moreover, the colorant 32 will not easily be blurred or peeled.

The method of the present invention exhibits at least two advantages. At first, it is efficient because the making of the inscription 31 is efficient. Secondly, it is inexpensive because only a small amount of colorant 32 is filled in the inscription 31.

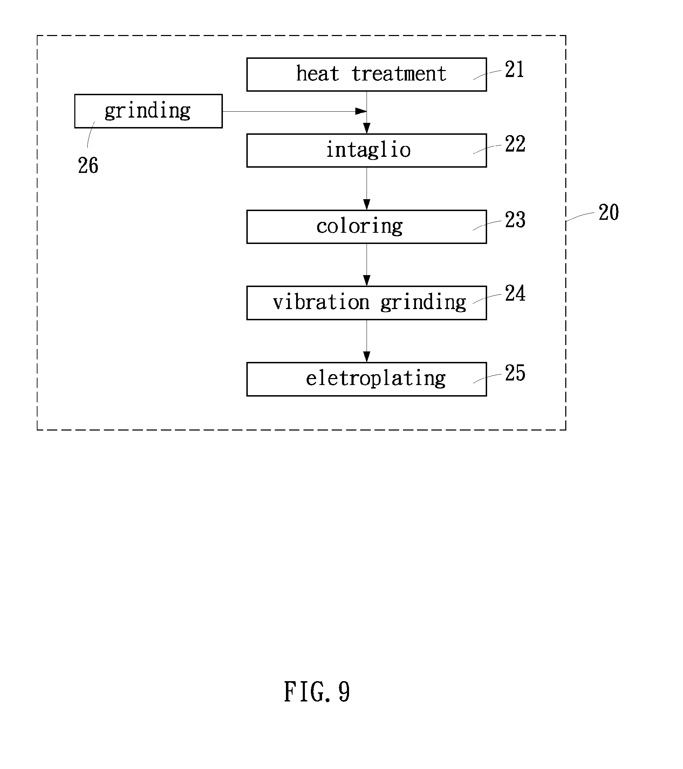

Referring to FIG. 9, there is shown a method for marking a tool in accordance with a second embodiment of the present invention. The second embodiment is identical to the first embodiment except including an additional step of grinding. The step of grinding is taken at 26, between the heat treatment and the inscription. The grinding is used to clear the tool of burs and/or contaminant to facilitate the adhesion of the colorant 32 to the surface of the tool. The grinding may be done with a finishing wheel.

The present invention has been described via the detailed illustration of the preferred embodiment. Those skilled in the art can derive variations from the preferred embodiment without departing from the scope of the present invention. Therefore, the preferred embodiment shall not limit the scope of the present invention defined in the claims.

## Claims

1. A method for marking a tool, the method subsequently including the steps:
hardening the tool;
making inscription 31 in the tool; and
filling colorant 32 in the inscription 31.

2. The method according to claim 1, wherein the step of hardening the surface of the tool includes the step of heat treatment on the tool.

3. The method according to claim 1, wherein the step of making the inscription 31 in the tool includes the step of pressing the tool.

4. The method according to claim 3, wherein the step of pressing the tool includes the step of rolling the tool.

5. The method according to claim 3, wherein the step of pressing the tool includes the step of punching the tool.

6. The method according to claim 1, further including the step of clearing the tool of an excessive portion of the colorant 32 placed outside the inscription 31.

7. The method according to claim 6, wherein the step of clearing the tool of the excessive proportion of the colorant 32 includes the step of grinding the tool.

8. The method according to claim 7, wherein the step of grinding the tool includes the step of vibration grinding the tool.

9. The method according to claim 6, further including the step of electroplating the tool after the step of clearing the tool of the excessive portion of the colorant 32.

10. The method according to claim 9, wherein the step of electroplating the tool includes the step of anodizing the tool.

11. The method according to claim 9, further including the step of grinding the tool between the steps of hardening the tool and making the inscription in the tool.
